# EUROPEAN PATENT SPECIFICATION

(11) **EP 3 994 976 B1**
(45) Date of publication and mention of the grant of the patent: **29.10.2025**
(21) Application number: 20206175.0
(22) Date of filing: 06.11.2020
(51) Int. Cl.: A01G 15/00

(54) **APPARATUS FOR ELECTRO-SPRAY CLOUD SEEDING**
VORRICHTUNG ZUR WOLKENIMPFUNG MIT ELEKTROSPRAY
APPAREIL D'ENSEMENCEMENT DE NUAGES PAR ÉLECTROPULVÉRISATION

(43) Date of publication of application: 11.05.2022
(73) Proprietor: Davydova, Elena, 6004 Luzern (CH)
(72) Inventor: Fluhrer, Helmut, 8955 Oetwil an der Limmat (CH); Davydova, Elena, 8955 Oetwil an der Limmat (CH); Saveliev, Yuri, Phayao (TH)
(74) Representative: Kurig, Thomas

(56) References cited:
- WO-A1-2013/086542
- US-A- 4 328 940
- US-A1- 2020 008 370

## Description

### Field of the invention

The present invention relates to an apparatus for electro-spray cloud seeding, specifically for weather modification by hygroscopic and glaciogenic seeding of clouds with charged droplets of selected water-based liquids.

### Prior art

In traditional definition, cloud seeding is a weather modification technique which involves the introduction of aerosols into a cloud by means of airborne or ground-based sources, that modifies the phase and size distribution of hydrometeors by promoting the formation and growth of ice particles and/or water droplets. The goal of cloud seeding is to alter the natural development of cloud in practical and potential applications such as increasing or reducing precipitation (snow and / or rain), reducing air pollution due to scavenging atmospheric aerosols by precipitating water particles, inhibiting hail formation, dissipating fog (which is a cloud with the lower boundary at the ground or close to it) and harvesting water from it, reducing lightning, and mitigating severe weather events, e.g. by inhibiting the formation of tornados and hurricanes at early stages.

Precipitation formation mechanisms are highly dependent on a particular location and meteorological conditions at this location. First, cloud droplets are formed by vapor condensation in the super-saturated air (i.e. in which the partial vapor pressure is greater than the saturation vapor pressure at the surface of water) on some aerosol particles with sizes greater than about 80 µm, called cloud condensation nuclei (CCN). In clouds with temperatures above 0 °C, called warm clouds, precipitation can develop only by collision-coalescence of cloud droplets, which motion is governed by the gravity and air currents within the cloud. The process of merging of collided droplets (i.e. those which made surface contact), called coalescence, does not occur in all collision instances in some of which droplets may repulse and/or fragment. Coalescence is characterized by its efficiency, which is defined as the fraction of all collisions between water droplets of a specified size that results in actual merging of the two drops into a single larger drop. Collision efficiency is the fraction of all water particles (droplets in this case) which, initially moving on a collision course with respect to other particles, actually collide with the other particles. Collision-coalescence efficiency, which is the product of collection and coalescence efficiencies, tends to be higher in cases of wide droplet size spectra where small droplets are merged with a large droplet, called collector, which acts as the drop embryo and descends faster as it grows.

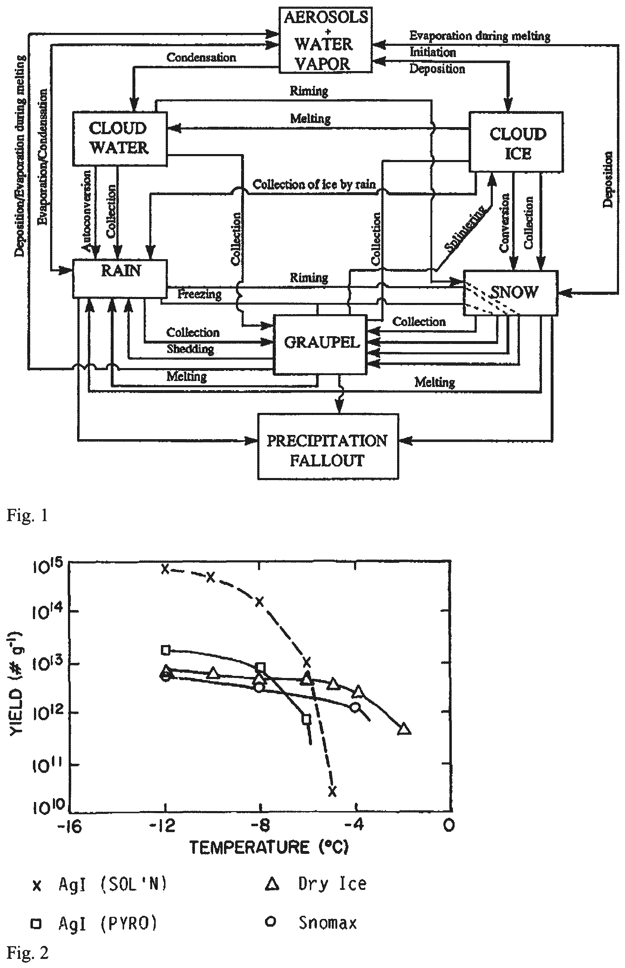

However, when cloud tops reach temperatures lower than 0 °C, called supercooling, the initial formation of solid state of water, called ice nucleation, may occur. In this case, precipitation can develop not only due to collision-coalescence, but to ice processes or a combination of both as well through a different set of paths, as illustrated in Fig. 1. It is estimated that about 50 % of global precipitation is attributed to clouds with ice processes.

Similar to collector droplets in droplet collision-coalescence, large ice particles collect liquid droplets on their descend in cloudy air that merge with ice particle and freeze upon the contact. This efficient process of converting liquid cloud water into ice, called riming, plays an important role in the formation of precipitation in cold clouds due to the rapid increase in ice particle mass. While riming activity is rarely noticeable at temperatures lower than -12 °C, it strongly increases closer to 0 °C (Kneifel and Moiseev, 2020), where the ice production by nucleation activity (sometimes called as primary ice production) is low (this will be discussed in more details later). Moreover, in the temperature range between -9 °C and -3 °C, some droplets collided with ice crystals may fragment during the freezing, thus producing new ice particles (splinters) that further grow and repeat the process (Hallett and Mossop, 1974). This secondary ice production by ice particle multiplication is called rime splintering or Hallet-Mossop mechanism. Other known mechanisms of ice multiplication are the fracture of fragile ice crystals and shattering or splintering of freezing drops in free fall. However, rime splintering is dominant ice multiplication mechanism in its temperature range.

Hygroscopic seeding is based on the introduction of artificial CCN into warm or mixed-phase areas of clouds (i.e. where the temperature is below 0 °C and some ice particles are present), aiming to the formation of droplets, which are larger than most of cloud droplets, by condensation of water vapor on those CCN. In this approach, particles of a hygroscopic substance are delivered to and dispersed in a cloud. In common practice, seeding medium is the powder of a hygroscopic salt such as sodium chloride (NaCl), calcium chloride (CaCl2), magnesium chloride (MgCl) etc. or a mixture of them with optimal particle size of 2 to 5 µm, which is prepared by milling and can be aerosolized. Because the water vapor saturation pressure over a hygroscopic salt or its aqueous solution is lower than that over pure water and thus lower than partial vapor pressure in the cloudy air, the vapor condenses relatively quickly on salt particles, leading to the formation of large droplets with diameters of more than about 35 µm, called giant cloud condensation nuclei (GCCN). Due to their sizes, GCCN act as efficient collectors of small droplets in the collision-coalescence process, resulting in an early development of large drops at the lower parts of clouds. In mixed-phase areas of clouds, the formation of GCNN may also lead to the formation of larger graupel (snow-like ice) particles, which may melt during their descend to the ground and fall as rain. Due to a lower surface-to-mass ratio of larger water particles, they suffer a lower mass loss in their way through the under-saturated air, therefore leading to higher amounts of precipitated water on the ground.

Glaciogenic seeding is based on the injection of ice nucleating particles into a supercooled cloud to stimulate precipitation by ice particle formation and growth. Ice nucleation can occur in clouds by different mechanisms. Supercooled droplets of pure water may remain in liquid phase down to their homogeneous freezing threshold temperature (i.e. the maximal temperature at which the freezing may occur) of about -39 °C. In clouds, however, the droplets may freeze at higher temperatures by so-called heterogeneous nucleation because of impurities in water such as the initial CCN on which the droplet grown, and solid aerosol particles previously scavenged by droplet during its growth. In this case, it is called that the (heterogeneous) ice nucleation occurred in the immersion freezing mode. Water droplet may also be frozen due to the contact of its surface with scavenged aerosol particle. In this case, it is called that the (heterogeneous) ice nucleation occurred in the contact freezing mode. Contact freezing may also occur when an immersed aerosol particle contacts the surface from inside of the droplet, e.g. when droplet evaporates. In this case, it is called that the (heterogeneous) ice nucleation occurred in the inside-out contact freezing mode. Heterogeneous ice nucleation may occur on dry solid aerosol particles. In this process, water vapor initially condenses on the surface of aerosol particle forming wetted areas, called nucleation sites, where liquid water may freeze. In this case, it is called that the (heterogeneous) ice nucleation occurred in the vapor deposition mode. Heterogeneous ice nucleation, facilitated by aerosol particles called ice nuclei (IN) in this context, is a stochastic process, which probability rapidly (quasi-exponentially) decreases with an increase in temperature and approaches zero at a certain value called nucleation threshold temperature (NTT). In general, the NTT of an IN depends on its nucleation mode, material, surface characteristics, and size. Generally, the NTT of an IN increases with an increase in the particle size.

Immediately after nucleation, ice particles in clouds may vigorously grow by vapor deposition because the partial vapor pressure of the cloudy air is typically greater than the saturation vapor pressure at the surface of ice. Moreover, because the latter vapor pressure is lower than the saturation vapor pressure at the surface of water, droplets in the vicinity of an ice particle evaporate in favor of its growth. This ice particle growth is called Wegener-Bergeron-Findeisen process (Bergeron, 1935; Bergeron, 1949) and may be combined with ice-to-ice (agglomeration) and ice-to-water (agglomeration with freezing) particle merging leading to the formation of larger ice particles (Fig. 1). Phase changes such as vapor deposition and liquid water freezing are accompanied with the release of latent heat, which may promote the further development of clouds due to the produced convection.

The objective of glaciogenic seeding is to introduce seeding materials that will produce the optimum initial concentration of ice particles in clouds for a particular application such as precipitation enhancement or inhibition. That concentration depends on the purpose of seeding and particular features of the clouds and background aerosols. The inhibition of precipitation and/or mitigation of hail and lightning requires higher concentrations of ice particles which growth can be suppressed by their competition for the available moisture in a cloud. This technique is called over-seeding.

The media proposed for glaciogenic seeding can be broadly classified into two groups. The first group are IN such as crystals of silver iodide (AgI), which has been commonly used, cheaper mineral alternatives to AgI such as lead iodide (PbI), potassium iodide (KI), cupric sulfide (CuS), and some organic substances which have crystalline structures similar to ice. The second group are particles of substances with a high removal of sensible heat by evaporation, which causes a strong air cooling in the vicinity of such a particle expanding into a gas and thus leading to the activation of natural IN. Pellets of dry ice (solid carbon dioxide) and droplets of liquid nitrogen and propane have been proposed for this purpose. It was found than those seeding media can work at cloud temperatures higher than in cases of AgI and many of its alternatives. However, dry ice and liquid nitrogen are not commonly used recently. First, those substances are unstable and have the problem with their long-term storage. The second limitation for using liquid nitrogen is its high cost. The second limitation for using dry ice pellets is also a high cost related to their preparation and dispersion into cloudy air. Since conventional rockets cannot be used as carriers for dispersing those pellets, high-load expensive airplanes are required for this purpose. Despite of a stronger cooling achieved by liquid nitrogen and especially by dry ice, liquid propane became the preferred glaciogenic seeding medium of its kind because of the advantages of easy storage, handling and dispersion into cloudy air in the form of droplets produced by spraying nozzles.

Ice nucleation by some organic substances with hexagonal molecular segments to which water molecules attach in an arrangement that mimics the structure of an ice crystal, has been investigated with increasing interest in their potential applications including cloud seeding. It was discovered that strains of bacterium Pseudomonas Syringae, which is a parasite of plants and established colonies on their leafs, can serve not only as CCN, but also as highly effective IN with NTTs up to about -1 °C. Later on, it was found that other micro-organisms can also serve as IN with NTTs significantly higher than those of mineral aerosols. Bio-aerosols with relatively high NTTs that are mostly attributed to their proteins, play an important role in precipitation formation in mixed-phase clouds even at their lower concentrations in air compared to mineral aerosols, thus establishing a link between the geosphere and biosphere. Christner et al. (2008) examined IN in snowfall and found that the most active of them were bio-aerosols. They reported that 69 % to 100 % of IN with sizes larger than 0.2 µm and active at temperatures higher than -7 °C, were bio-aerosols and a substantial fraction of these aerosols were bacteria.

Due to bio-security concerns, using living microbial cultures are not recommended in many applications including cloud seeding. One safe solution could be using SnomaxTM, a product from Johnston Controls, which is a powder of freeze-dried dead bacteria of a selected strain of Pseudomonas Syringae grown at special conditions to achieve the highest possible NTT of about -1 °C. However, in practical applications such as artificial snow making in ski resorts and energy saving in ice rinks, the recommended temperatures for using SnomaxTM in immersion mode is about -3 °C or lower. Seeding clouds with SnomaxTM was already attempted with some success. Ward and DeMott (1989) reported visible glaciation effects in clouds that were apparent at -5 °C level caused by SnomaxTM in condensation mode, a particular case of immersion mode when a particle first served as CCN and then as IN. The authors also conducted experiments with SnomaxTM in cloud chamber. They found that ice nucleation efficiency of SnomaxTM particles in condensation mode was comparable to that of dry ice pellets, which is important in practice because of easier storage and handling of these particles. SnomaxTM ice nucleation yield was found to decrease by less than one order of magnitude between -12 °C (5.5 × 1012 g-1) and -4 °C (1.3 × 1012 g-1). This contrasts with 3 - 5 orders of magnitude losses of efficiency of AgI-type aerosols, which are produced by burning a combustible liquid or flares containing AgI particles, over the same temperature range. The potential advantages of SnomaxTM versus AgI-type aerosols are evident at temperatures higher than about -5 °C to -7 °C where the latter are inefficient (Fig. 2). Interestingly, rime splintering has the peak of ice particle multiplication factor at the temperature of about -5 °C which is nearly in the middle of the temperature range of this ice multiplication mechanism dominant over other such mechanisms between -9 °C and -3 °C.

Some other ice nucleating organic materials that are known by now, including phloroglucinol (C6H6O3), metaldehyde, and 1,5-Dihydroxynaphthalene (C₁₀H₆(OH)₂), can be more effective ice nuclei in terms of NTT, more cost effective, and more environmentally friendly than silver iodide. Under the guidelines of the Clean Water Act by the EPA, silver iodide is considered as a hazardous substance, a priority pollutant and a toxic pollutant, which continuous use in cloud seeding can affect some living species even at small concentrations (Fajardo et al., 2016).

Cloud seeding techniques in the prior art suffer from numerous drawbacks. Aerosol generators such as blowers for particles of seeding media in the form of powder are a relatively heavy piece of equipment on airborne carriers. Moreover, powders are often subject to the agglomeration and caking even in a short-term storage, which is especially problematic in case of hygroscopic powders even at a low moisture content. This leads to the creation of particles of sizes that are much greater than optimal. Although extra-large seeding particles could be beneficial for the creation of larger droplet collectors in hygroscopic seeding or for the rapid formation of larger ice particles in glaciogenic seeding, such seeding particles may be too heavy for the transportation by airborne carriers to provide the optimal particle concentration in clouds on a reasonable scale of operation. In case of ground-based seeding in the presence of regular vertical air transport, which in practice is based on natural air uplift produced by winds hitting the slopes of mountains and therefore called orographic seeding, poor levitation of large particles leads to a higher seeding medium loss. Incorporation of seeding particles into burning liquids or flares, which became a common practice up to date, can mitigate the problems of agglomeration and caking but at the cost of a reduced performance of a given mass of the compound medium in both hygroscopic and glaciogenic seeding. Moreover, bio-aerosols and many other ice nucleating organic materials cannot be incorporated in burning media. As for liquefied gases for glaciogenic seeding such as liquid propane, they have an advantage of easy dispersion by spraying but also a disadvantage of the need for heavy high-pressure storage tanks, which contribute to the passive payload (i.e. additional to the weight of the active component of seeding medium) of airborne carriers.

The problem of capital and operational cost minimization, in particular related to passive payloads of airborne carriers in different forms, environmental concerns related to the use of some seeding media, and the need for exploring and using other microphysical processes to solve the said problems of weather modification, recently brought researcher's attention to the effects of cloud particle electrification, in particular those related to attractive electric forces between charged cloud particles, which lead to precipitation formation and / or enhancement.

Droplets and other particles of any cloud are naturally charged to some degree, which depends on the type of a particular cloud and its development stage. Some mixed phase clouds can reach so-called thunderstorm stage, at which they become highly electrified due to a number of known and possibly unknown cloud particle charging mechanisms, which are directly or indirectly related to the charge separation by ice processes and provide positive feedback for the production of ice and precipitation. In thunderstorm clouds, high positive and negative space charge accumulate in top and bottom cloud regions, which may cause discharges in the form of lightning, either inside the cloud, to the ground, or above the cloud called sprites.

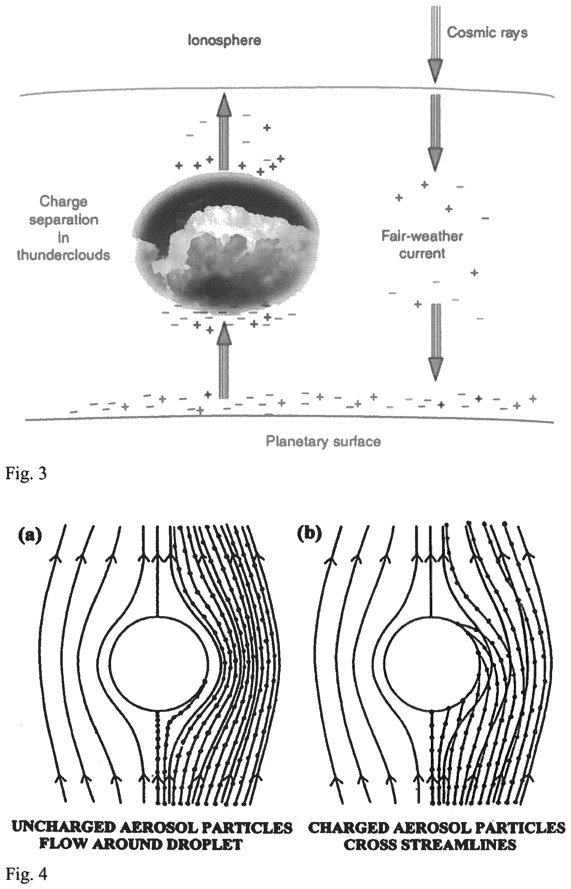

Atmospheric air is electrically conductive due to the natural bipolar air ionization, which is the charge separation in the form of air ion (i.e. charged molecular cluster) couples with the opposite electric sign created by energetic particles such as cosmic rays (the primary contributor) and produced by the decay of natural radioactive materials (the secondary contributor) on the surface of the Earth and/or uplifted by convective or orographic updrafts. Electric air conductivity sharply increases with the height up to the ionosphere and the electrical resistivity of the Earth-to-ionosphere air column is mostly attributed to the boundary layer of the lower troposphere with the thickness of about 2-3 km. In this vertical air conductivity profile, thunderstorm clouds around the world act as charge separators maintaining the global Earth-to-ionosphere electric potential of about 250-280 kV. This simple atmospheric electric system, which can be represented as the Earth-to-ionosphere spherical capacitor with leakage electric current (also known as fair weather electric current), was discovered by Wilson (1929) and is known as Global Electric Circuit (GEC). Schematic diagram of GEC is presented in Fig. 3.

Cloud particles of non-thunderstorm clouds charged positively on the top and negatively on the bottom of the cloudy-to-clear air interface due to electric conductivity gradient between a lower conductive cloudy air and higher conductive clear air (by about an order of magnitude) in the GEC leakage current flowing through those clouds. A low conductivity of cloudy air is due to the attachment of air ions, which are charge carriers in atmospheric electric current, to droplets and other cloud aerosols. In this configuration of a local cell of GEC, the initial charge separation created as air ionization by energetic particles in atmosphere on the microscopic scale, is transformed into the macroscopic charge separation between oppositely charged particles on the top and the bottom cloud boundaries.

In weakly charged non-thunderstorm clouds in the GEC as described, the residue particle from evaporation of a charged cloud droplet in the cloudy-to-clear air interface preserves most of its charge. When a large cloud droplet (collector) falls through an entrained filament of dry air, the scavenging of those evaporation residues carrying 10-200 electron charges by the collector can be enhanced by 1-2 orders of magnitude (e.g. Tinsley et al., 2000, Jaworek el al., 2002) due to electric image force caused by droplet polarization in the electric field of a charged particle, which affects the trajectory of this particle relative to the descending droplets as illustrated in Fig. 4.

This force is always attractive, and, at sufficiently small distance between a charged particle and droplet, may exceed the repulsive Coulomb force in case where both of them are charged with the same electric sign. The electro-scavenging of CCN through cycles of cloud formation and dissipation will produce broader CCN spectra that more readily trigger precipitation. Moreover, droplet evaporation residues may act as effective evaporation IN (Beard, 1992) because the ice nucleating ability of those particles can be greatly enhanced by a condensation-evaporation cycle (Rosinski and Morgan, 1991; Rosinski, 1995). Interestingly, sizes of bio-aerosol evaporation IN are in the range of about 0.5-5 µm (e.g. the bacterium Pseudomonas Syringae is rod-shaped with the diameter of 0.5 µm and the length of 5 µm) are the most favourable for electro-scavenging. Because ice nucleation is often a precursor to precipitation, the charge on cloud droplets may play a significant role in triggering precipitation by promoting contact between charged evaporation IN and supercooled cloud droplets (Tinsley, 2000; Tinsley et al., 2000; Tripathi et al, 2002, Tinsley et al., 2007; Harrison et al., 2015).

Because the droplet charging in non-thunderstorm clouds scales with the leakage atmospheric electric current in GEC, precipitation and other weather variables are modulated by air ionization which is predominately governed by the solar wind. The link between solar and meteorological weathers in the natural climate change cycles is well established in the modern science. Most of publications in this field were focused on the long-term, large-scale (global and regional) statistical averages and correlations between the variables of those weathers, in particular precipitation, in climate variability studies (e.g. Tinsley, 2000; Kniveton and Todd, 2001; Harrison, 2004; Tinsley et al., 2007; Lam and Tinsley, 2015) but their importance for weather modification applications was recognized only recently. Harrison et al. (2020) examined a major increase in GEC leakage electric current as the result of local inadvertent increase in bipolar air ionization near the ground and in low troposphere, caused by the release of artificial radioactivity. A 47% increase in GEC leakage current density from 2.0 pA m-2 to 2.0 pA m-2 accompanied by 24% increase in statistically averaged daily rainfall, and local clouds optically thickened within the nuclear weapons test period.

A window of opportunity for environmentally friendly weather modification is based on the local modification of leakage electric current in GEC. In practice, this modification can be achieved without strong bipolar ionization by artificial radioactivity. One approach is negative (unipolar) charging of natural and/or introduced aerosols by negative ground-based corona discharge powered by high voltage direct current (HVDC) source in continuous or pulsed mode, where the emitter electrode producing negative air ions is elevated above the ground, which serves as collector electrode of corona discharge. Atmospheric aerosols are charged by attachment of predominantly the same sign (unipolar) air ions (mostly below and in the vicinity of the emitter electrode) and, in the presence of winds and updrafts, can propagate as negative plume of space charge up to a few kilometers horizontally and up to the elevation of few hundred meters. In contrast to more electrically stable charged aerosols that can preserve most of their charge for about 10 minutes depending on environmental conditions, most of ions that are not attached to aerosols are recombined on the ground and cannot be transported to long distances. Combined with a higher electrical conductivity of air in the plume compared to the ambient value, relatively strong electric field produced by the plume increases the local density of leakage electric current in GEC. Although higher elevations of the space charge plume are preferable, it is not necessary that it should reach a cloud. This concept of weather modification was previously discussed in research literature (Wilderer et al., 2011; Zheng et al., 2020) and described in patent publications based on it (RU99107952A, WO2010012354A1, AU2009275553B2). An improved design of ground-based unipolar aerosol charger, in which negative corona discharge is synergistically combined with electro-sprayers producing a high additional space charge of evaporating droplets of a water-based suspension of fine solid particles, which are charged by induction and produce highly charged aerosol in the form of droplet evaporation residues, was recently proposed.

The proposed invention of remote cloud charging by the local modification of the leakage electric current density in GEC with charged aerosol plumes are inexpensive and environmentally friendly. Similar to the case of ground-based aerosol generators for cloud seeding, ground-based aerosol chargers require winds, orographic features and/or regular occurrence of convective updrafts for their most effective operation of modifying mixed-phase clouds. Therefore, complimenting this invention with the direct charging of droplets in clouds from airborne carriers, especially to promote the collision-coalescence in warm clouds and achieve a higher mobility of operations, may be desirable in some cases despite of higher operating costs and possibly smaller area of influence.

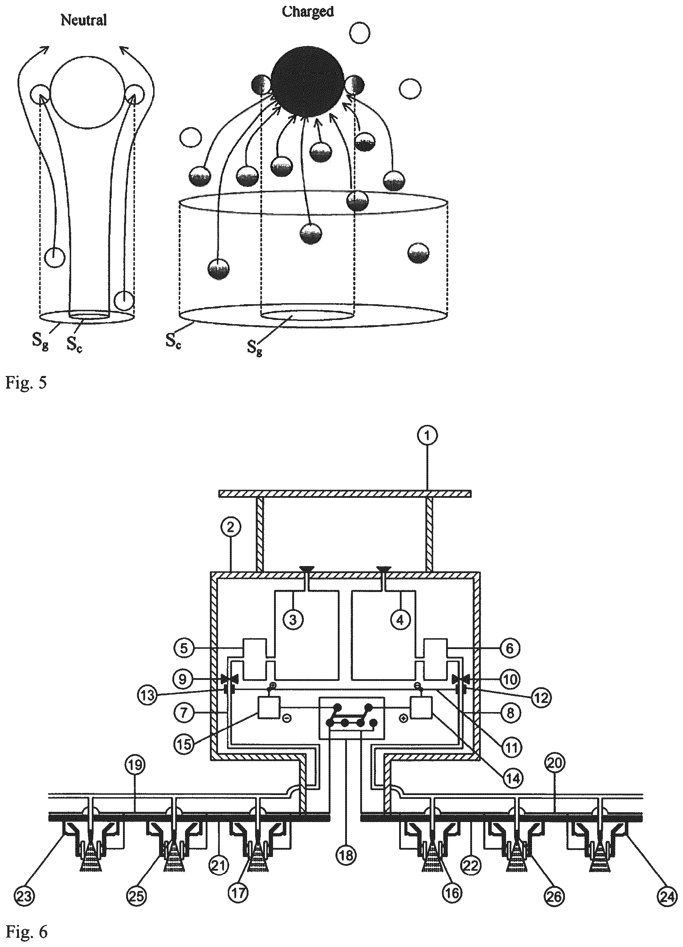

Khain et al. (2004) proposed a new method for rain enhancement and fog elimination based on the promotion of droplet collision-coalescence by attractive electric forces. According to this method, some fraction of the droplets is taken from a cloud or fog, charged and then injected back into the cloud or fog. To verify the efficiency of the method, a novel model of simulation was developed to analyze the droplet spectrum evolution by collisions in case when a certain fraction of the droplets in a droplet spectrum is charged. Attractive electric forces between charged and neutral droplets, as well as between charged droplets, were calculated as the function of the magnitude and sign of the charges, droplet size, and distance between droplets. The authors demonstrated that due to the induction of image charges, significant attraction forces arise between charged and neutral droplets, leading to a significant increase in the collision efficiency as illustrated in Fig. 5. Evolution of initially narrow droplet size spectra, which are typical for non-raining polluted clouds, demonstrated rapidly triggered collisions and raindrop formation in a few minutes after the injection of just a small fraction of charged droplets. Simulations of fog seeding were conducted using droplet spectra distributions of typical fog. Seeding by charged fog droplets of one or both polarities was simulated. In both cases a significant increase in fog visibility was found.

In cloud modification, however, the three-stage process of collection, charging and then dispersal of charged droplets in the conventional method is technically difficult to achieve in practice. Handling large volumes of cloudy air on airborne carriers such as airplanes would require large chambers and, very likely, a heavy equipment. If droplets are charged by attachment of ions produced by corona discharge, the rate of charge transfer to droplets is limited by time required to fully charge droplets. Moreover, regardless of the droplet charging technique, the carrier will quickly become charged with the sign opposite to that of charged droplets due to the law of electric charge conservation. Eventually, this carrier charge will create problems in continuing the operation and even may cause a damage to the carrier and/or the equipment on it. Disposing this carrier's charge, either periodically or continuously, is technically challenging.

Spraying electrically charged droplets of pesticide solutions from airplanes recently became increasingly used in agriculture because of better application of those droplets and their charged evaporation residues to plants due to attractive electric forces. Charged droplets are produced and dispersed by electro-spraying nozzles, to which pesticide solution is fed by pump and high operating voltage (typically several kV) is supplied by a HVDC. An electro-spraying nozzle comprises an ordinary nozzle and charging electrode, known as extractor electrode, as the source of strong electric field causing the shear stress on the liquid surface and thus facilitating the disintegration of the liquid jet ejected from the nozzle's capillary into droplets. The extractor electrode is typically made in the form of metallic ring electrically coupled to the first (active) electrode of the HVDC, which second electrode is electrically coupled to the conductive liquid supplied to the capillary with the aid of a pump. The ring is centered around the jet and positioned at a distance from the jet origin. In this setup, the produced droplets can be inductively charged to a degree when electrostatic forces overcome the surface tension, causing the fragmentation of droplets into smaller ones. This process known as Rayleigh instability (Rayleigh,1882), may repeat more than once until the stable stage is achieved. As a result, the formed droplets can be extremely small, with sizes about 1 µm and even smaller in some cases, and highly charged up to a fraction of the Rayleigh instability limit. The charge and size of the droplets of a particular solution can be controlled to some extent by adjusting the liquid flow rate, the diameter of capillary orifice, and the voltage applied to the nozzle electrode. In crop dusting, the average diameter of droplets produced by electro-spraying with the capillary orifice diameter 0.7 mm is about 100-120 µm. Charged droplets are self-dispersing in the space due to mutual Coulomb repulsion, which results in the inhibition of droplet agglomeration by coalescence, which is a common problem with conventional spraying nozzles.

Electro-spraying nozzles are simple and cheap in manufacturing and in practice can provide a higher charge to spray droplets by induction than by ion attachment in chargers based on the direct current corona discharge. To avoid the charge accumulation on airplane, positively and negatively charging electro-spraying nozzles are located under different wings on separate beams and powered by two HVDC sources of opposite polarity. In this configuration, positive and negative currents of droplets leaving the airplane are balanced. All onboard equipment for electro-spraying including nozzles, pipes, pump, HVDC sources and the low voltage DC source are relatively lightweight compared to the tank with pesticide solution, which is the main payload on the airplane.

Patent literature US 2020/008370 A1 relates to a system using a spray assembly to spray electrically charged fluid below selected clouds so that an updraft carries the charged fluid into the cloud and induces precipitation. The size, charge, and design of the sprayers are specifically designed to elicit precipitation. Patent literature US 4328940 A relates to a method of spraying electrically charged particulate material to ground from a low flying airplane. The method includes the steps of imposing an electrical charge of given polarity upon an emitted primary spray of particulate material of sufficient magnitude to electrostatically enhance the deposition thereof and concurrently emitting a secondary spray of oppositely charged particulate material of selective character from said airborne source at a charge level of a magnitude to avoid material degradation of the charge on said primary spray intermediate its loci of emission and deposition. Patent literature WO 2013/086542 A1 relates to a system and a method for producing solid nano-particles of a material by dispersing very small droplets of liquid in which the material is dissolved. The nano-particles being particularly useful for geoengineering for increasing cloud reflectivity. The system includes pump for supplying the liquid; and orifices included in at least one sprayer. The liquid upon being supplied to said sprayer forming droplets after flowing through the sprayer's orifices. The sprayer is selected from a group consisting of domed sprayers; cusped cone sprayers; and Taylor cone sprayers. The method includes the steps of both pressurizing and heating the liquid so the liquid is in a supercritical state wherein the liquid becomes like a dense gas and the surface tension approaches zero; and dispersing the pressurized and heated liquid in the supercritical state through an orifice.

### Summary of the invention

It is an object of the present invention to provide an improved apparatus for cloud seeding which is more efficient than prior art. The invention is set out in the appended set of claim.

The object of the invention is achieved by an apparatus for mobile electro-spray cloud seeding, comprising a storage tank, at least one nozzle, which is connected to said storage tank through a pipe and / or hose, and at least one high-voltage direct current source for charging droplets ejected from said nozzle. The advantage of the apparatus is that it can be easily adapted for installation at different mobile carriers and for different cloud types, i.e. warm and / or cold clouds. The preferred arrangement of a plurality of nozzles is in staggered rows.

It is preferred that the apparatus is carried by an airborne carrier, especially a drone.

The advantage of a drone is that the wind flow caused by the propellers of the drone can be used for directing the charged droplets exactly to the area of interest.

It is preferred that said storage tank is intended for storing a liquid which proves efficient for cloud seeding.

According to the invention, the apparatus for mobile electro-spray cloud seeding further comprises at least one extractor electrode arranged adjacent to said nozzle, for charging said ejected droplets, said extractor electrode being connected to said high-voltage direct current source. The output voltage of the at least one extractor electrode is constant and / or pulsed and regulated for equalizing nozzle consumption currents.

According to the invention, said ejected droplets are charged positive and negative. It is important for avoiding charge accumulation on the mobile carrier that the polarity of the charged droplets is positive and negative.

According to the invention, at least one nozzle is adapted to produce droplets having an average diameter between 5-15 µm which yields improved cloud seeding results.

According to the invention, said nozzle is adapted to produce a liquid flow of less than 0.4 cm³/s.

According to the invention, said nozzle has a capillary orifice diameter of less than 0.5 mm.

According to the invention, said nozzle is adapted to provide an operating voltage ≥ 10 kV.

According to the invention, said ejected droplets have an average diameter between 5-15 µm.

It is preferred that said pipe and / or hose are for guiding said liquid.

It is preferred that said liquid is a hygroscopic and / or a glaciogenic seeding liquid.

It is preferred that the apparatus further comprises at least one enclosure. The at least one enclosure is adapted to accommodate components of the apparatus. Further, the spraying direction is away from said enclosure.

It is preferred that at least one pump is provided in said pipe and / or hose. At least one pump is provided in said pipe and / or hose for hydraulically supplying said nozzle with said hygroscopic and / or glaciogenic seeding liquid from said storage tank.

It is preferred that at least one valve is provided at said pipe and / or hose.

It is preferred that said pipe and / or hose is connected to said high-voltage direct current source via a wire. This connection has proven useful to serve the issue that the system of the high voltage generator must be earthed. In an airborne system it has to be connected to a conductor, which is said liquid in this case.

It is preferred that said pipe and / or hose is connected to said high-voltage direct current source via at least one conductive segment, which is provided at said pipe and / or hose, via said wire.

It is preferred that said enclosure is connected to said high-voltage direct current source.

According to the invention, the apparatus further comprises a high voltage polarity switching relay for controlling charging polarity of said extractor electrode, connected to said nozzle with another wire.

It is preferred that the apparatus further comprises at least one coupling for supporting said extractor electrode.

It is preferred that the apparatus further comprises at least one beam for supporting said nozzle and / or said extractor electrode.

The at least one beam is mechanically or directly coupled to said enclosure and also supports said at least one coupling.

### Brief description of the drawings

In Fig. 1, various pathways are illustrated by which water vapor is transformed into various types of cloud particles and precipitation.
In Fig. 2, a comparison of the ice crystal yield versus temperature for SnomaxTM, dry ice, and AgI-type ice nucleating aerosols from combustible liquid and pyrotechnic formulations is illustrated.
In Fig. 3, a schematic diagram of the global electrical circuit is illustrated.
In Fig. 4, the effect of aerosol particle charge on trajectories near a droplet is illustrated.
In Fig. 5, a scheme of hydrodynamic droplet interaction and collisions in the cases of (left) neutral and (right) charged collector drop is illustrated. In the case of neutral droplet collisions, the collision cross section S_{c} is less than the geometrical cross section S_{g} (the collision efficiency E = S_{c}/S_{g} < 1). In the case in which the collector drop is charged, E = S_{c}/S_{g} > 1.
In Fig. 6, a non-limiting example of the electro-spray cloud seeding system on airborne carrier, hereinafter referred as the apparatus, is illustrated.
In Fig. 7, the preferred arrangement of nozzles in the planar array configuration is illustrated.
In Fig. 8, a schematic diagram of a nozzle is illustrated.

### Detailed description of the drawings

In principle, spraying of highly charged water droplets into clouds with airborne electro-sprayers by the practically proven technique as described above could be a viable solution for weather modification based on the electrical enhancement of the collision-coalescence process, which is especially important for rain formation and enhancement in warm clouds. The attractive electric image forces between highly charged electro-spray droplets and uncharged (or weakly charged) cloud droplets are independent on the electric sign of the former droplets. Therefore, the efficiency of introduced charged droplets as droplet collectors is independent of their sign.

Electro-spray nozzles used in agriculture for crop dusting produce large droplets with diameters typically ranging between 90 µm and 120 µm. Since cloud seeding operations are on much bigger scales compared to agricultural fields, the introduction of such heavy droplets into the tops of clouds is impractical since the required mass of water could be too high for airborne carriers. It is known that uncharged droplets with diameters of about 40-50 µm and greater can serve as efficient collectors and can be produced by sprayers but in practice, even those sizes require a high payload of water. According to Khain et al. (2004), sufficiently strong water droplet charging may in principle reduce the minimal droplet size close to cloud droplet sizes of about 10 µm, which can be achieved with inductive electro-spray nozzles. Although smaller droplets with the diameter D₀ acquire smaller maximal charge by induction that is scaling almost directly with D₀², the electric field strength near the droplet surface scales inversely with D₀² and thus weakly dependent on droplet size. In theory, the efficiency of hygroscopic particles as embryos for collector droplets could be also improved by the electrification to some degree, but their charging would be even smaller, technically difficult to achieve, and the difficulties related to their dispersal would remain.

In the present invention, the gist resides in combining the advantages of hygroscopic seeding and electro-spraying with mutual mitigation of their disadvantages. A concentrated aqueous solution of selected non-toxic hygroscopic salts with a low equilibrium relative humidity (ERH) or their mixture, served as liquid desiccant, is atomized into charged droplets and dispersed into clouds or close to them with inductive electro-spray nozzles, where the charging yields of positively and negatively charging nozzles located on separate beams attached to airborne carrier apart from each other, are balanced to prevent charge accumulation on the carrier. Similar to dry hygroscopic particles, hygroscopic droplets are growing from their low initial mass ~D₀³ while preserving their initial charge ~D₀², which enhances the collision-coalescence process as previously discussed. To achieve the optimal balance between the initial values of droplet charge and mass, the preferred range of initial droplet size is about 5 µm < D₀ < 15 µm.

One non-limiting example of environmentally friendly liquid desiccant is an aqueous solution of non-toxic and bio-degradable potassium format (CHKO2) with the ERH = 19 % of saturated solution. Another non-limiting candidate is non-toxic magnesium chloride (MgCl2) with the ERH = 34 % of saturated solution. Calcium chloride (CaCl2) with the ERH = 29 % of saturated solution can also be used, but its high corrosiveness may be a problem and more expensive metals should be used to handle it.

Desalination plants generate huge volumes of brine that is commonly discharged back to the sea. In order to minimize an increase of seawater salinity, which poses a threat to local marine ecosystems, there is an urgent need for environmentally friendly management of desalination brine. Multi-stage extraction technologies based on the controlled evaporation of that brine (e.g. Pérez-González, 2012) have been proposed for mining different minerals including sodium chloride (NaCl), CaCl2, and MgCl2. In particular, brine bitterns that is a magnesium-rich solution of salts left after the extraction of NaCl from desalination brine, have been proposed as a low cost non-toxic liquid desiccant suitable for various applications including micro-climate control in greenhouses (Lychnos, 2010). Lychnos et al. (2010) and Lychnos et al. (2012) concluded that the properties of brine bitterns are similar to those of pure magnesium chloride solution, in particular ERH of saturated solution in the range of about 32 % - 37 % depending on the geographic area of origin.

The initial mass of water as a fraction of the total mass of the proposed liquid seeding medium is reasonable in practice because the mass of water required for the deliquesce of a dry salt particle to its saturated solution is comparable to the mass of the latter. For example, the solubility in water of magnesium chloride hexahydrate (MgCl2·6H2O), in which form MgCl2 is commercially available, is 2350 g/L at 20 °C. It is preferable that the salt solution is prepared, stored, and applied reasonably close to the saturation with a safety margin to avoid its accidental crystallization. In case of salts which solubility significantly increases with temperature, reasonably higher temperatures of the solution are preferred. After the introduction into cool air, some of the solute may temporarily crystallize in the rapidly cooled droplets, but care should be taken to avoid the crystallization of warm solution due to the cooling in the hydraulic system, which components such the storage tank, hoses and the outer surface of nozzles should be preferably coated with a heat insulator.

The advantage of proposed salts such as CHKO2, MgCl2, and brine bitterns over NaCl (ERH = 75% of saturated solution), which is commonly used in hygroscopic cloud seeding, is their lower ERH. This leads to the formation of larger collectors and/or allows a smaller initial droplet mass. One known seeding technique for convective clouds is the introduction of hygroscopic particles into the base of such a cloud or into the updraft below it. These particles may grow by condensation and then by collision-coalescence, as they are carried up and subsequently fall down, thus traveling over a longer distance in the cloudy air compared to the case of non-convective clouds where the particles are typically seeded from the cloud top. Charged droplets with a lower ERH may not evaporate but grow by condensation to larger sizes starting in the non-cloudy under-saturated air, which in some cases makes it possible to introduce them into the cloud from the ground, such as by orographic seeding. However, in order to avoid a significant charge loss in this case, the time of charged droplet transportation in the clear air should not exceed about 10 min in most cases, depending on the electric conductivity of the latter.

As airborne carriers for cloud seeding, in particular by the present invention, modern drones could be the preferred alternatives to airplanes because of their increased affordability, remote operations, wide range of flight speeds, and high payload relative to the total apparatus mass as onboard pilot is not needed. Flying airplanes into or near the clouds in strong updrafts and downdrafts may require good pilot skills and even dangerous. Electro-spraying nozzles for operations on airplanes are arranged for horizontal air flow and designed for a typical range of high air speeds. On a drone, the nozzles should be preferably located in groups below the drone propellers at the variable angle of air attack.

Although the present invention can also work in mixed-phased clouds, an opportunity to enhance the ice production in these clouds should not be missed because, under some cloud conditions at temperatures lower than about -4 °C, the enhancement of ice production could be more beneficial than the enhancement of collision-coalescence. Almost all hygroscopic salts solutions freeze at low temperatures compared to water and some of them, including those proposed for hygroscopic seeding as previously discussed, are used in practice as antifreezing agents.

As even small salt concentrations in the grown and diluted droplet may significantly inhibit the droplet freezing, one solution to the problem is to sacrifice the condensational droplet growth by replacing salt solution with water in which ice nucleating particles with a high NTT are suspended. If such a charged droplet is frozen, its missed growth by salt-enhanced condensation may be compensated due to the growth by Wegener-Bergeron-Findeisen process. Moreover, secondary ice production by rime splintering on a charged ice particle may be significantly enhanced due to electric forces attracting water droplets to the latter and thus enhancing the collision efficiency. Due to a low electrical conductivity of cloudy air, electric charge on droplets and particles originated from them can be preserved for about 20-40 min, the time that is sufficient for the action of the most of charge-enhanced cloud processes.

It is known that weak solutions of some hygroscopic ammonium salts such as ammonium sulfide ((NH4)2SO4) and ammonium chloride (NH4Cl) with concentrations of about 10-2 M, which is typical in diluted droplets formed from solid particles with the diameter of about 1 µm, have the same NTT as pure water or even higher for some IN in immersion mode (e.g. Whale et al., 2018). Particles of materials used in glaciogenic cloud seeding such as CuS and AgI and natural kaolin particles, which are abundant in the atmosphere, are known to nucleate at higher temperatures in the presence of ammonium salts, although particles of many other untested substances may exhibit this behavior. The presence of ammonia salts has no or little effect on the NTT of silica, humid, and microbial protein particles, and some other untested substances may be included in the list. It is known that in terms of NTT, contact freezing is more effective than immersion freezing for most of known IN. Therefore, it is likely that an increase of NTT of some IN due to the presence of ammonium salts is also present in contact freezing mode, which is directly promotable by droplet electrification, although this increase is yet to be quantified.

Accordingly, it is preferred that solutions of hygroscopic ammonium salts such as (NH4)2SO4, NH4Cl (saturated solutions of both of them have ERH about 82% at room temperature) or a mix of them with optimized concentrations are used as the base for IN suspensions instead of pure water in the present invention of glaciogenic seeding. In this case, despite of a lower hygroscopic performance of those solutions in terms of the droplet size compared to that of CHKO2, MgCl2, and brine bitterns, the droplet may freeze either due to the immersed IN or by the electrically promoted contact freezing with a natural IN at an elevated NTT, whatever event comes first.

The choice between liquids for hygroscopic and glaciogenic seeding by electro-spraying proposed in the previous section as non-limiting examples generally depends on the temperature of cloudy air. In clouds with tops at temperatures higher than about -4 °C, hereinafter referred as warm clouds, in which the development of ice processes is unlikely, hygroscopic seeding is the only option. In other clouds in terms of cloud top temperature, hereinafter referred as cold clouds, either hygroscopic seeding with strong liquid desiccants, i.e. those with low initial values of ERH, hereinafter referred as hygroscopic liquid, or glaciogenic seeding with suspensions of IN in water or (preferably) in the solution of ammonium salt, hereinafter referred as glaciogenic liquid, can be used as described previously. In cold clouds, especially in cases when the cloud top temperature is well below - 4 °C, electro-spray seeding with glaciogenic liquid or with both glaciogenic and hygroscopic liquids may be preferred. Therefore, it is preferred that electro-spray cloud seeding system comprises at least two separate tanks in which both hygroscopic and glaciogenic liquids can be stored for operations in which those liquids are sprayed with different nozzles. In this hybrid operational mode, charged droplets of different seeding liquids can enhance both collision-coalescence of droplets and ice production processes in clouds. In purely hygroscopic or glaciogenic operational modes, all tanks are filled with the same hygroscopic or glaciogenic liquid respectively.

Practically suitable airborne carriers for electro-spray cloud seeding system are airplanes, zeppelins, helicopters, and drones. The optimal spray direction of electro-spraying nozzles is along the direction of air flow in the vicinity of a particular airborne carrier. Since the air flow in the vicinity of an airplane or zeppelin due to the carrier motion is practically horizontal, the direction of electro-spraying nozzles can be fixed horizontally as in the case of crop-dusting airplanes. In case of helicopters and drones, the preferred nozzle orientation is variable since the direction of air flow in the vicinity of carrier depends on both horizontal flight velocity and vertical velocity of air due to operating propeller(s).

A non-limiting example of the electro-spray cloud seeding system on airborne carrier, hereinafter referred as the apparatus, is illustrated in Fig. 6. Some of the system components can be placed inside of the carrier enclosure 1 or inside the enclosure 2, which is an attachment to the carrier's body. The system comprises two storage tanks 3 and 4 for hygroscopic and glaciogenic seeding liquids L1 and L2, filled up with the same or different liquids which are ultimately supplied to electro-spray nozzles of two different groups 25 and 26 hydraulically coupled to the said tanks respectively with the aid of pumps 5 and 6 via hydraulic connectors 7 and 8 such as pipes or/and hoses, where the flow of liquid(s) can be turned on and off with the aid of valves 9 and 10. The same or different seeding liquids in hydraulic circuits originating from storage tanks 3 and 4 are electrically coupled with the wire 11. In case of electrically non-conductive hydraulic connectors 7 and 8, e.g. in the form of plastic pipes or / and hoses, conductive pipe segments 12 and 13, which should be present in both hydraulic circuits, are electrically coupled with the wire 11. In case of electrically conductive enclosure 1 of airborne carrier, it is preferred that this enclosure is electrically coupled to the wire 11 with another wire (not shown), and the same applies in the case of electrically conductive enclosure 2. The apparatus further comprises two HVDC sources 14 and 15 providing the opposite polarity charging for extractor electrodes 16 and 17 of the said two nozzle groups, which output voltage is either constant or pulsed, and wherein the output voltage of at least one of them is regulated to equalize their consumption currents in order to mitigate the abovementioned charge accumulation on the apparatus and the carrier. This is necessary due to the dependence of the nozzle consumption current on electrical and mechanical properties of a particular liquid. In order to flexibly control the charging polarity of extractor electrodes 16 and 17, and thus the electric sign of droplets of liquids L1 and L2, the apparatus further comprises a high voltage polarity switching relay 18, which output electrodes are electrically coupled to the latter electrodes of two different nozzle groups with wires 19 and 20 respectively. This may be necessary because in operations involving glaciogenic liquid, the NTT and thus the efficiency of IN in the electrically promoted contact mode depends on the droplet charge sign, which affects the stochastically preferable alignment of water molecules on the droplet's surface (e.g. Ehre et al., 2010; Acharya and Bahadur, 2018).

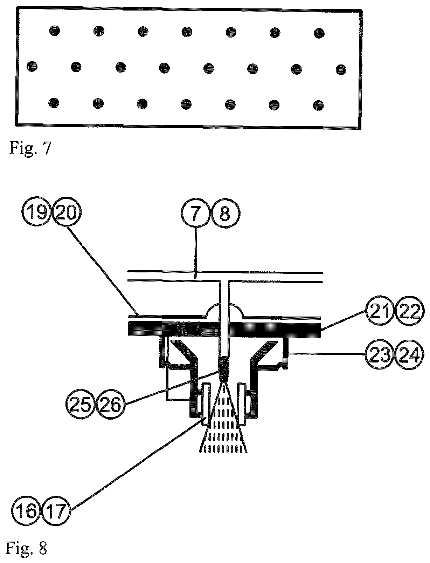

The nozzles of each group are mechanically supported by one or more beams 21 and 22 in each group, which are mechanically coupled to the enclosure 2 as shown in Fig. 6 or directly to the enclosure 1. This support is provided by means of handlers 23 and 24 for a nozzle array for each beam, whereby the orientation of all nozzles in this array towards the direction of air flow attack can be fixed or be flexible. The preferred arrangement of nozzles in the planar array configuration and schematic diagram of a nozzle are presented in Fig. 7 and Fig. 8 respectively.

As noticed previously, the charge and size of the electro-sprayed droplets of a particular solution can be controlled to some extent by adjusting the liquid flow rate, the diameter of capillary orifice, and the voltage applied to the nozzle electrode. In the proposed cloud seeding approach, the preferred average droplet diameter ranges between 5 µm and 15 µm, which is an order of magnitude smaller than that used in crop dusting, but still achievable by electro-spraying under conditions of a lower liquid flow per nozzle (< 0.4 cm3 s-1), capillary orifice diameter (< 0.5 mm), and higher operating voltage (≥ 10kV). Therefore, it is preferred that the lower output of nozzles optimized to cloud seeding compared to that accepted in crop dusting is compensated by a larger number of nozzles, preferably arranged as shown in Fig.7.

An apparatus is also encompassed wherein said pipe and / or hose 7, 8 may be connected to said high-voltage direct current source 14, 15 via a wire 11. Alternatively or in addition, said pipe and / or hose 7, 8 may be connected to said high-voltage direct current source 14, 15 via at least one conductive segment 12, 13, which is provided at said pipe and / or hose 7, 8, via said wire 11. Further, said enclosure 1, 2 may be connected to said high-voltage direct current source 14, 15. Finally, a high voltage polarity switching relay 18 for controlling charging polarity of said extractor electrode 16, 17 may be connected to said nozzle 25, 26 with another wire 19, 20. Further, at least one coupling 23, 24 may be provided for supporting said extractor electrode 16, 17. Also, at least one beam 21, 22 for supporting said nozzle 25, 26 and / or said extractor electrode 16, 17 may be provided.

## Claims

1. Apparatus for mobile electro-spray cloud seeding, comprising
a storage tank (3, 4),
at least one nozzle (25, 26), which is connected to said storage tank (3,4) through a pipe and / or hose (7, 8),
at least one high-voltage direct current source (14, 15) configured for charging ejected droplets ejected from said nozzle (25, 26 so as to charge said ejected droplets to be charged positive and negative, and
at least one extractor electrode (16, 17) arranged adjacent to said nozzle (25, 26) and configured for charging said ejected droplets, said extractor electrode (16, 17) being connected to said high-voltage direct current source (14, 15),
wherein
said at least one nozzle (25, 26) is adapted to produce said ejected droplets having an average diameter between 5-15 µm,
said nozzle (25, 26) is adapted to produce a liquid flow of less than 0.4 cm³/s,
said nozzle (25, 26) is provided with a capillary orifice diameter of less than 0.5 mm,
said nozzle (25, 26) is adapted to provide an operating voltage ≥ 10 kV and
the apparatus further comprises a high voltage polarity switching relay (18) for controlling charging polarity of said extractor electrode (16, 17), connected to said nozzle (25, 26) with another wire.

2. Apparatus according to claim 1, wherein the apparatus is carried by an airborne carrier, especially a drone.

3. Apparatus according to claim 1 or 2, wherein said storage tank (3, 4) is intended for storing a liquid.

4. Apparatus according to claim 3, wherein said pipe and / or hose (7, 8) are for guiding said liquid.

5. Apparatus according to claim 3, wherein said liquid is a hygroscopic and / or a glaciogenic seeding liquid.

6. Apparatus according to any one of claims 1 to 5, further comprising at least one enclosure (1, 2).

7. Apparatus according to any one of claims 1 to 6, wherein at least one pump (5, 6) is provided in said pipe and / or hose (7, 8).

8. Apparatus according to any one of claims 1 to 7, wherein at least one valve (9, 10) is provided at said pipe and / or hose (7, 8).

## Patentansprüche

1. Gerät zur mobilen Elektrospray-Wolkenimpfung, umfassend
einen Vorratsbehälter (3, 4),
mindestens eine Düse (25, 26), die über eine Leitung und / oder einen Schlauch (7, 8) mit dem Vorratsbehälter (3, 4) verbunden ist,
mindestens eine Hochspannungs-Gleichstromquelle (14, 15), die so konfiguriert ist, dass sie aus der Düse (25, 26) ausgestoßene Tröpfchen auflädt, um die ausgestoßenen Tröpfchen positiv und negativ aufzuladen, und
mindestens eine Extraktionselektrode (16, 17), die neben der Düse (25, 26) angeordnet ist und so konfiguriert ist, dass sie die ausgestoßenen Tröpfchen auflädt, wobei die Extraktionselektrode (16, 17) mit der Hochspannungs-Gleichstromquelle (14, 15) verbunden ist,
wobei
die mindestens eine Düse (25, 26) so angepasst ist, dass sie die ausgestoßenen Tröpfchen mit einem durchschnittlichen Durchmesser zwischen 5-15 µm erzeugt,
die Düse (25, 26) so angepasst ist, dass sie einen Flüssigkeitsstrom von weniger als 0,4 cm³/s erzeugt,
die Düse (25, 26) mit einem Kapillaröffnungsdurchmesser von weniger als 0,5 mm bereitgestellt ist,
die Düse (25, 26) so angepasst ist, dass sie eine Betriebsspannung von ≥ 10 kV bereitstellt, und
das Gerät ferner ein Hochspannungs-Polaritätsumschaltrelais (18) zum Steuern von Ladungspolarität der Extraktionselektrode (16, 17) umfasst, verbunden mit einem weiteren Draht mit der Düse (25, 26).

2. Gerät nach Anspruch 1, wobei das Gerät von einem luftgestützten Träger, insbesondere einer Drohne, getragen wird.

3. Gerät nach Anspruch 1 oder 2, wobei der Speichertank (3, 4) zum Speichern einer Flüssigkeit bestimmt ist.

4. Gerät nach Anspruch 3, wobei das Rohr und / oder der Schlauch (7, 8) zum Leiten der Flüssigkeit dienen.

5. Gerät nach Anspruch 3, wobei die Flüssigkeit eine hygroskopische und / oder eine glaziogene Impf-Flüssigkeit ist.

6. Gerät nach einem der Ansprüche 1 bis 5, ferner umfassend mindestens ein Gehäuse (1, 2).

7. Gerät nach einem der Ansprüche 1 bis 6, wobei mindestens eine Pumpe (5, 6) in dem Rohr und / oder Schlauch (7, 8) bereitgestellt ist.

8. Gerät nach einem der Ansprüche 1 bis 7, wobei mindestens ein Ventil (9, 10) an dem Rohr und / oder Schlauch (7, 8) bereitgestellt ist.

## Revendications

1. Appareil pour l'ensemencement mobile de nuages par électro-pulvérisation, comprenant
un réservoir de stockage (3, 4),
au moins une buse (25, 26), qui est connectée audit réservoir de stockage (3, 4) par un tuyau et/ou un flexible (7, 8),
au moins une source de courant continu haute tension (14, 15) configurée pour charger des gouttelettes éjectées par ladite buse (25, 26) de manière à charger lesdites gouttelettes éjectées de façon qu'elles soient chargées positivement et négativement, et
au moins une électrode d'extraction (16, 17) agencée à proximité de ladite buse (25, 26) et configurée pour charger lesdites gouttelettes éjectées, ladite électrode d'extraction (16, 17) étant connectée à ladite source de courant continu haute tension (14, 15),
dans lequel
ladite au moins une buse (25, 26) est adaptée pour produire lesdites gouttelettes éjectées selon un diamètre moyen compris entre 5µm et 15µm,
ladite buse (25, 26) est adaptée pour produire un débit de liquide inférieur à 0,4cm³/s,
ladite buse (25, 26) est pourvue d'un diamètre d'orifice capillaire inférieur à 0,5mm
ladite buse (25, 26) est adaptée pour fournir une tension de fonctionnement ≥ 10kV, et
l'appareil comprend en outre un relais de commutation de polarité haute tension (18) pour commander la polarité de charge de ladite électrode d'extraction (16, 17), connecté à ladite buse (25, 26) par un autre fil.

2. Appareil selon la revendication 1, l'appareil étant transporté par un transporteur aérien, en particulier un drone.

3. Appareil selon la revendication 1 ou la revendication 2, dans lequel ledit réservoir de stockage (3, 4) est destiné à stocker un liquide.

4. Appareil selon la revendication 3, dans lequel ledit tuyau et/ou flexible (7, 8) sert à guider ledit liquide.

5. Appareil selon la revendication 3, dans lequel ledit liquide est un liquide d'ensemencement hygroscopique et/ou glaçogène.

6. Appareil selon l'une quelconque des revendications 1 à 5, comprenant en outre au moins une enceinte (1, 2).

7. Appareil selon l'une quelconque des revendications 1 à 6, dans lequel au moins une pompe (5, 6) est prévue dans ledit tuyau et/ou flexible (7, 8).

8. Appareil selon l'une quelconque des revendications 1 à 7, dans lequel au moins une vanne (9, 10) est prévue au niveau dudit tuyau et/ou flexible (7, 8).
